# EUROPEAN PATENT SPECIFICATION

(11) **EP 2 943 076 B1**
(45) Date of publication and mention of the grant of the patent: **06.09.2017**
(21) Application number: 14702441.8
(22) Date of filing: 10.01.2014
(51) Int. Cl.: A23P 20/12, A23L 7/157

(54) **A FOOD-PROCESSING EMULSION WITHOUT GLUTEN FOR FOOD COATING**
GLUTENFREIE NAHRUNGSMITTELVERARBEITUNGSEMULSION ZUR NAHRUNGSMITTELBESCHICHTUNG
ÉMULSION AGROALIMENTAIRE SANS GLUTEN POUR ENROBAGE ALIMENTAIRE

(30) Priority: 10.01.2013 CZ 20130019
(43) Date of publication of application: 18.11.2015
(73) Proprietor: Extrudo Becice s.r.o., 375 01 Tyn nad Vltavou (CZ)
(72) Inventor: BEDNAROVA, Dana, 373 65 Dolni Bukovsko (CZ); SOBISKOVA, Gabriela, 375 01 Tyn nad Vltavou (CZ); VLASEK, Martin, 390 03 Tabor (CZ); FUCHS, Martin, 373 65 Dolni Bukovsko (CZ); SYKORA, Stanislav, 375 01 Tyn nad Vltavou (CZ)
(74) Representative: Jirotkova, Ivana
(86) International application number: PCT/CZ2014/000003
(87) International publication number: WO 2014/108105

(56) References cited:
- EP-A1- 1 488 706
- EP-A1- 2 522 230
- EP-B1- 1 343 392
- WO-A1-88/06007
- WO-A1-2011/101664
- US-A- 4 588 600
- US-A1- 2012 288 592

## Description

### Technical Field

The object of the present invention is a food-processing emulsion without gluten for coating of foods (meat, fish, vegetables and cheese), the specific composition of which enables joining of various types of breadcrumbs (dry) with the coated food. The use of lupine and chickpeas in the food processing industry is part of the Czech Technology Agency (TAČR) task solved by our company: TA01010737 - Development of Technological Processing of Highly Nutritive Pulses Recently Implemented in the World for Utilization to Prepare Common Foodstuffs and Dietary and Nutrition Products".

### Background Art

In the prior art, emulsions are known that use an egg mixture as the carrier and are thickened (emulsified) with wheat flour or its derivatives (modified starch) or animal proteins, for technological preparation of the product for application of a dry layer (breadcrumbs or batter). According to the prior art there is a trend towards higher requirements for increasing the efficiency of the process (emulsion stability), shortening the preparation time of the product, improving the final quality of the prepared product and reducing loading of the organism by allergens.

With regard to the increasing occurrence of allergies in the population - especially in children, products with a limited content of allergens, mainly, gluten, eggs and milk are getting in higher demand. At the same time, new methods of ingredient preparation (grinding, extrusion) enable the use of non-traditional ingredients (pulses), meeting the required emulsification characteristic and maintaining the generally representative sensory properties of the product. An advantage of these ingredients is that they are prepared without modified starch, other additives, colorants and stabilizers.

Batters used so far, e.g. as described in EP 2 536 299 A1 Edible batter compositions and methods of preparing batter-coated foods using the same, or EP 1 343 392 B1 Batter composition comprising starch, dextrin and rice flour for fried food products, which solve the problem of emulsification and emulsion stability with the use of animal proteins and peptides or starch and dextrin naturally meet the required technological and sensory parameters, but do not deal with the problem of allergens or special groups of consumers - e.g. vegetarians. EP2522230 discloses a coating composition that comprises 55 to 80 wt% water and 20 to 45 wt% by dry weight of an ingredient mixture including: a. 35 to 60 wt% of a flour component comprising one or more flours selected from soy flour, maize flour, rice flour and wheat flour; b. 15 to 35 wt% of non-modified starch; c. 0.1 to 5 wt% of a gelling agent; d. 0 to 15 wt% of modified starch; and e. 0 to 35 wt% of other edible ingredients.

WO8806007 discloses a batter mix composition mixable with water to form a microwaveO cookable batter emulsion which comprises from 35 to 60 parts by weight of modified starch, from 25 to 45 parts by weight of flour, said flour being substantially gluten free, and from 8 to 12 parts by weight of protein. A batter emulsion is formed by dispersing the batter mix in water.

### Disclosure of Invention

The object of the invention is a food-processing emulsion without gluten for coating of foods (meet, fish, vegetables and cheese) characterized in that it consists of 20 to 50% by weight of a dry mixture and water, wherein the dry mixture contains granulated native rice flour and at least one granulated native pulse flour, selected from the group comprising chickpea flour and lupine flour, and optionally extracted vegetable proteins. The composition of the emulsion according to this invention complies with the requirements for gluten-free food and meets the definition of vegetarian food.

The dry mixture contains at least one granulated native pulse flour, selected from the group comprising chickpea flour and lupine flour. The selection of the main component is mainly related to the optimization of sensory properties and the respective specification with respect to the list of allergens (eliminating soy and partly lupine). The pulses lupine and chickpea have proved perfect emulsification characteristics in the given granulation range between 10 and 250 µ. Reduction of the upper limit under 100 µ considerably improves the emulsifying characteristics, increases the yield of the dry mixture and stability of the resulting emulsion, but the economical costs do not compensate the effect.

The dry mixture in the present invention contains 23.8 to 28.1 % by weight of native chickpea flour with the granulation of 10 to 400 µ and 1.3 to 3.9 % by weight of native lupine flour with the granulation of 10 to 250 µ an/or 6.6 to 8.3 % by weight of native rice flour with the granulation of 10 to 250 µ and/or 1.3 to 2.7 % by weight of lupine protein with the granulation of 10 to 250 µ.

The food-processing emulsion is produced by mixing of the dry mixture with water at a temperature of 16 to 35 °C, the required amount of water depending on the type of material to be coated and being such to obtain a smooth emulsion.

In an especially convenient embodiment the composition of the food-processing emulsion in % by weight is as follows:

| | |
|---|---|
| Water | 57 to 67 % |
| Dry mixture | 33 to 43 % |

In an especially convenient embodiment the composition of the dry mixture in % by weight is as follows:

| | |
|---|---|
| Native chickpea flour | 23.8 to 28.1 % |
| Native lupine flour | 1.3 to 3.9 % |
| Native rice flour | 6.6 to 8.3 % |
| Lupine protein | 1.3 to 2.7 % |

### Examples

### A)

| **Name** | **g in 100 g of preparation** |
|---|---|
| Water | 66.7 |
| Dry mixture | 33.3 |
| | |

| **Composition of the dry mixture** | **g in 100 g of preparation** |
|---|---|
| Native chickpea flour | 24.7 |
| Native rice flour | 7.3 |
| Lupine protein | 1.3 |

### B)

| **Name** | **g in 100 g of preparation** |
|---|---|
| Water | 57.2 |
| Dry mixture | 42.7 |
| | |

| **Composition of the dry mixture** | **g in 100 g of preparation** |
|---|---|
| Native chickpea flour | 28.1 |
| Native lupine flour | 3.6 |
| Native rice flour | 8.3 |
| Lupine protein | 2.7 |

### C)

| **Name** | **g in 100 g of preparation** |
|---|---|
| Water | 62.5 |
| Dry mixture | 37.5 |

| **Composition of the dry mixture** | **g in 100 g of preparation** |
|---|---|
| Native chickpea flour | 26.5 |
| Native rice flour | 7.9 |
| Native lupine flour | 3.6 |

## Claims

1. A food-processing emulsion without gluten for coating of foods, **characterized in that** it consists of 20 to 50 % by weight of a dry mixture and water, wherein the dry mixture contains granulated native rice flour and at least one granulated native pulse flour, selected from the group comprising chickpea flour and lupine flour, and optionally extracted vegetable proteins.

2. The food-processing emulsion according to claim 1, **characterized in that** the dry mixture contains 6.6 to 8.3 % by weight of native rice flour with the granulation of 10 to 250 µ and 23.8 to 28.1 % by weight of chickpea flour with the granulation of 10 to 400 µ and/or 1.3 to 3.9 % by weight of lupine flour with the granulation of 10 to 250 µ and/or 1.3 to 2.7 % by weight of extracted vegetable protein.

3. The food-processing emulsion according to claims 1 or 2, **characterized in that** the extracted vegetable protein is lupine protein.

## Patentansprüche

1. Glutenfreie Nahrungsmittelverarbeitungsemulsion zur Nahrungsmittelbeschichtung, **dadurch gekennzeichnet, dass** sie aus 20 bis 50 Gew.-% Trockengemisch und Wasser besteht, wobei das Trockengemisch granuliertes natives Reismehl und wenigstens ein granuliertes natives Hülsenfruchtmehl, ausgewählt aus der Gruppe, welche Kichererbsenmehl und Lupinenmehl umfasst, sowie, wahlweise, extrahierte pflanzliche Proteine enthält.

2. Nahrungsmittelverarbeitungsemulsion nach Anspruch 1, **dadurch gekennzeichnet, dass** das Trockengemisch 6,6 bis 8,3 Gew.-% natives Reismehl mit einer Korngröße von 10 bis 250 µ und 23,8 bis 28,1 Gew.-% Kichererbsenmehl mit einer Korngröße von 10 bis 400 µ und/oder 1,3 bis 3,9 Gew.-% Lupinenmehl mit einer Korngröße von 10 bis 250 µ und/oder 1,3 bis 2,7 Gew.-% extrahiertes pflanzliches Protein enthält.

3. Nahrungsmittelverarbeitungsemulsion nach Anspruch 1 oder 2, **dadurch gekennzeichnet, dass** es sich bei dem extrahierten pflanzlichen Protein um Lupinenprotein handelt.

## Revendications

1. Une émulsion exempte de gluten pour l'industrie alimentaire, pour l'enrobage d'aliments, **caractérisée en ce qu'**elle consiste en 20 à 50% en poids d'un mélange sec et d'eau, dans laquelle le mélange sec contient de la farine de riz native granulée et au moins une farine de légumes secs native granulée et éventuellement des protéines végétales extraite, la farine de légumes secs étant choisie dans le groupe comprenant la farine de pois chiche et la farine de lupin.

2. L'émulsion pour l'industrie alimentaire selon la revendication 1, **caractérisée en ce que** le mélange sec contient :
- de 6,6 à 8,3% en poids de farine de riz native présentant une granulation de 10 à 250µ et
- de 23,8 à 28,1% en poids de farine de pois chiche dont la granulation est de 10 À 400µ et/ou
- de 1,3 à 3,9% en poids de farine de lupin dont la granulation est de 10 à 250µ et/ou
- de 1,3 à 2,7% en poids de protéine végétale extraite.

3. L'émulsion pour l'industrie alimentaire selon les revendications 1 ou 2, **caractérisée en ce que** la protéine végétale extraite est une protéine de lupin.
